# EUROPEAN PATENT SPECIFICATION

(11) **EP 1 509 033 B1**
(45) Date of publication and mention of the grant of the patent: **17.10.2012**
(21) Application number: 03292049.8
(22) Date of filing: 19.08.2003
(51) Int. Cl.: H04M 7/00

(54) **Method and devices for connecting IP terminations and PSTN terminations**
Verfahren und Vorrichtung zum Verbinden von IP-Anschlüssen und PSTN-Anschlüssen
Procédé et dispositif de connection de terminaisons IP et terminaisons RTPC

(43) Date of publication of application: 23.02.2005
(73) Proprietor: Alcatel Lucent, 75007 Paris (FR)
(72) Inventor: Webel, Thilo, D-75177 Pforzheim (DE); König, Günther, D-70825 Korntal-Münchingen (DE); Schwab, Andreas, D-70435 Stuttgart (DE); Pargmann, Eckart, D-71282 Hemmingen (DE)
(74) Representative: Sciaux, Edmond

(56) References cited:
- EP-A- 1 109 368
- US-B1- 6 292 478
- US-B1- 6 426 942
- HOUGHTON T F ET AL: "A PACKET TELEPHONY GATEWAY FOR PUBLIC NETWORK OPERATORS" ISS '97. WORLD TELECOMMUNICATIONS CONGRESS. (INTERNATIONAL SWITCHING SYMPOSIUM). GLOBAL NETWORK EVOLUTION: CONVERGENCE OR COLLISION? TORONTO, SEPT. 21 - 26, 1997, ISS. WORLD TELECOMMUNICATIONS CONGRESS. (INTERNATIONAL SWITCHING SYMPOSIUM), TORONTO, P, vol. 2, 21 September 1997 (1997-09-21), pages 35-44, XP000704453
- HUITEMA C ET AL: "AN ARCHITECTURE FOR RESIDENTIAL INTERNET TELEPHONY SERVICE" IEEE NETWORK, IEEE INC. NEW YORK, US, vol. 13, no. 3, May 1999 (1999-05), pages 50-56, XP000870631 ISSN: 0890-8044

## Description

### Field of the Invention

The invention relates to a method and a devices for providing services among a Internet Protocol (IP) network and a telecommunications network, and more specifically, to a method and devices for providing advanced call services to subscriber of the IP network and subscriber of the telecommunication network.

### Background of the Invention

Today beside the telecommunication networks the Internet has become the major network for providing communication services. The Internet was basically not designed for voice communication purposes, but there is a desire to connect both network. However, because of the different originating purposes and approaches of the networks and the resulting different architectures a connection approach has to solve several difficulties.

One well known approach is the use of media gateways and media gateways controllers. A media gateway is in general a gateway converting media streams from a IP network to a telecommunication network, e.g. a public switched telephone network (PSTN) like a ISDN network or an analog telephone network, and vice versa. That means that audio data of the PSTN network are converted in packet data for transport via the Internet. The media gateway is controlled by the media gateway controller using certain protocols like the media gateway control protocol (MGCP) or the Megaco / H.248 Standard protocol. A media gateway controller is in general a softswitch used for converting IP signalling to PSTN signalling.

Advanced call services like call waiting, call-back on busy, three-party call or conference call, caller ID, charge information, call transfer and so on are available in telephone networks. In order to enables such services also for IP network subscribers and for PSTN subscribers calling IP network subscribers respectively, the media gateway and the media gateway controllers have to be provided with appropriate components for executing these services to the IP world. That means, they have to be provided with hardware and software components which are with respects to its functions similar to the telephone exchange components, but adapted to the IP conditions, i.e. the services being already in place for the PSTN are rebuilt for the IP network. One example is described in the US 6,292,478, which provides an architecture to permit the caller to set-up and carry out a telephone call over Internet with a special service. Such sophisticated media devices and media controllers are expensive and have to be provided as extra equipment. The building up of such a network structure is time consuming as well as cost extensive.

### Summary of the Invention

It is an object of the present invention to provide a method and devices for establishing calls with respect to advanced call services, which enables a smooth migration and evolution, respectively, of the presently used exchanges towards the IP-networks, in particular the Next Generation Networks (NGN).

Furthermore subscribers which are connected via IP-Gateways shall have at least a part of advanced call services and also with the same behaviour as the PSTN subscribers.

Another object of the present invention is to provide a method and devices for linking the presently telecommunication network and the IP-network in an efficient and flexible way in view of providing advanced call services.

These objects are achieved by a method according to claim 1, a media gateway controller exchange according to claim 8, a media gateway controller according to claim 9 and an exchange according to claim 10.

By using a so called extend mechanism according to the invention advanced call services are provided for AGW and PSTN subscribers and AGW and PSTN terminations respectively. According to the invention the call service functions, which has been offered within a telephone network by the network (service) provider, are maintained in the same service quality. Network provider can continue to use their "traditional" telephone networks while extending their IP networks.

The extend mechanism comprises a detecting of call conditions for applying the extend mechanism, an inserting of a gateway for providing advanced telecommunication services in a bearer connection of terminations involved in the call connection, a routing of the bearer to a digital switching device of the exchange via the inserted gateway and a providing of the advance call service.

The detecting of call conditions comprises for example a request or a need for a advanced call service triggered by a subscriber or a component of the telecommunication system. The inserted gateway for providing advanced telecommunication services is connected with a predetermined port of the exchange. The bearer is routed to a digital switching device of the exchange via the inserted gateway. Thereby, advanced call service features of the exchange, e.g. of the digital switching device or other devices of the exchange, are accessible and the advanced call services are provided.

The inserted gateway is preferably controlled by a media gateway controller, which is associated to the exchange to which the gateway is bearer connected.

A media gateway controller for executing the method according to the invention comprises means for executing the extend mechanism, wherein said means co-operate with corresponding means of a exchange for executing the extend mechanism, in particular for controlling the inserting and/or removing of said extend gateway and/or providing the advanced call service to the subscriber.

An exchange for executing the method according to the invention comprises means for executing the extend mechanism, wherein said means co-operate with corresponding means of a media gateway controller for executing the extend mechanism, in particular for controlling the inserting and/or removing of said extend gateway and/or providing the advanced call service to the subscriber.

In a preferred embodiment of the invention, the media gateway controller and the exchange are realised as one combined device, following called media gateway controller exchange.

In a preferred embodiment of the extend mechanism, the gateway is inserted in an existing bearer connection and/or in a to be established bearer connection of the involved AGW and/or PSTN terminations. That means, that the insertion might occurs in the call set-up phase or in a stable phase. If bearer related advanced call features are invoked in a established call connection, the bearer is re-configured by insertion of the gateway in order to access the digital switching device of the exchange.

In a further embodiment of the invention, the inserted gateway is in addition re-used for PSTN termination interworking call connection. The insertion of the gateway used for providing of advanced call features is furthermore used for the call connection between the AGW subscribers and PSTN subscribers or terminations respectively. This is in particular the case for subscribers which are assigned via their corresponding access gateways and exchanges to the same media gateway controller. With other words: The call connection is established by re-using the extend mechanism to provide a interworking connectivity.

Various other benefits, embodiments and modifications of the invention will be understood from a consideration of the following detailed description taken in conjunction with the accompanying drawing.

It is to be understood that the aforementioned features and the features explained below can be used not only in the respective combinations described but also in other combinations or alone.

### Brief Description of the Drawings

Preferred embodiments of the present invention will now be described with reference to the accompanying drawings in which
- Figure 1: shows in general a network architecture of the state of the art having a PSTN network and an IP network connected to each other by media gateways and media gateway controllers;
- Figure 2: shows schematically a system for establishing calls between a PSTN terminations and IP network terminations using AGW's and TGW's as media gateways;
- Figure 3: shows schematically a system for executing a so called extend mechanism according to the invention; and
- Figure 4: shows in more detail a media gateway controller exchange (MGC /EX) according to the invention for executing the extend mechanism.

### Detailed Description of the Invention

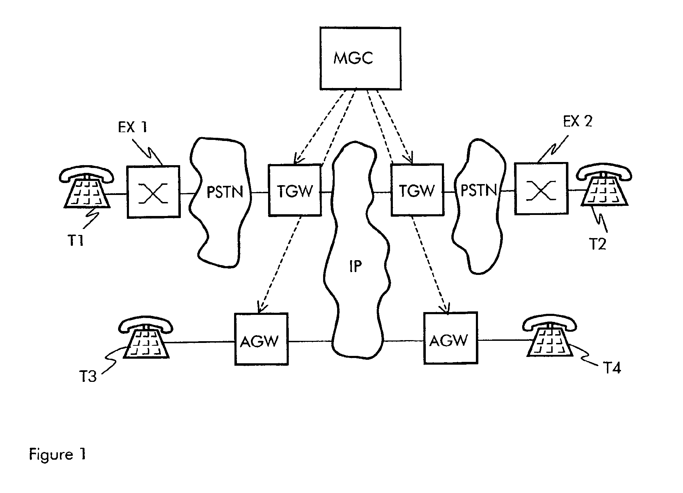

Figure 1 shows in general a network architecture of the state of the art having a PSTN network and an IP network connected to each other by media gateways and media gateway controllers.

In general, calls are established among public switched telephone network (PSTN) terminals T1, T2, and among Internet Protocol (IP) network terminals T3, T4 as well as between PSTN terminals T1, T2 and IP terminals T3, T4, i.e. subscribers of a circuit switch network will also connected with subscriber of a packet switched network.

Terminal T1 is connected with a PSTN network via a telephone exchange EX1 and terminal T2 via a telephone exchange EX1. Such subscribers are following called PSTN subscriber. Furthermore , terminals T3, T4 are connected with an IP network via access gateways (AGW). Such subscribers are following called AGW subscriber. The terminals T1, T2, T3, T4 are in particular telephone devices, but can be for example computers too.

The PSTN networks shown in Figure 1 are connected with the IP network by trunk gateway (TGW). The AGW's and TGW's are controlled by a media gateway controller (MGC). The AGW's and TGW's, when arranged in the network structure as shown in Figure 1, act as media gateways (MG). The telephone exchange (EX) is for example a local exchange (LEX).

A media gateway is in general a gateway converting media streams from a IP network to a PSTN network, e.g. a ISDN network or an analog telephone network, and vice versa. That means that audio a data of the PSTN network are converted in packet data for transport via the Internet. The media gateway is controlled by the media gateway controller using certain protocols like the media gateway control protocol (MGCP) or the Megaco / H.248 Standard protocol. A media gateway controller is in general a softswitch used for converting IP signalling to PSTN signalling.

Today telephone networks, in particular the ISDN network offers a wide range of services like call forwarding (unconditional, if no answer, if busy), call waiting, call-back on busy, three-party call or conference call, caller ID, charge information, call transfer and so on. However, such add-on telephone services are at least partly available for digital switched analog subscriber lines too. In order to enables such services also for IP network subscriber, i.e. AGW subcsriber, and for PSTN subscriber calling AGW subscriber, respectively, the media gateway and the media gateway controllers have to be provided with appropriate components for executing these services to the IP world. An example to this is a conference service, where special IP based conference devices could be used for the AGW subscribers, whereas for the PSTN subscribers the existing conference bridges are used. The media gateway controller must be able to convert and interwork the call handling for these services for both domains (AGW subscribers and PSTN subscribers), that means the signalling information but also the bearer related functions like switching, routing or reconfiguration. With other words: They have to be provided with hardware and software components which are with respects to its functions similar to the telephone exchange components, but adapted to the IP conditions. Such sophisticated media gateways and media gateway controllers are expensive and have to be provided on several border points between telephone world and IP world. The building up of such a network structure is time consuming as well as cost extensive.

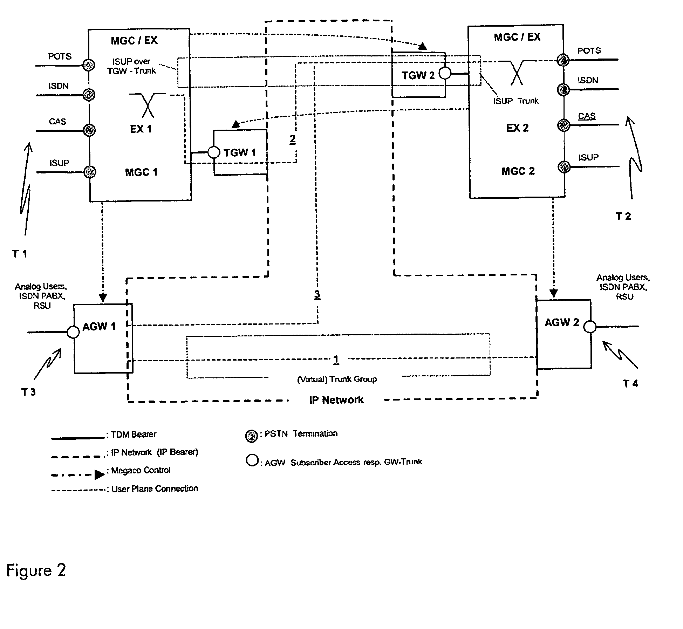

Presently used IP network gateways like access gateways (AGW) or trunk gateways (TGW) are able to provide simple call services like busy line signalling tone, dial-tone or call-waiting-tone. Thus, such media gateways together with media gateway controllers are used for providing simple call connection between AGW subscriber and PSTN subscribers or AGW terminations and PSTN termination respectively. Such call connections are exemplary shown in figure 2 with reference numbers 1 to 3 for a network structure of the state of the art.

Figure 2 shows with reference number 1 a call connection between the two AGW subscriber terminations T3 and T4, connected to first and second access gateways AGW 1, AGW 2. As indicated in figure 2, the AGW subscribers could be analog users, integrated service digital network (ISDN) users, private automatic branch exchange (PABX) users or remote subscriber unit (RSU) users.

Reference number MGC/EX denotes a media gateway controller exchange device, i.e. a telephone exchange EX and a media gateway controller MGC realised as one device, called a media gateway controller exchange (MGC/EX). For a person skilled in the art it is understandable, that both devices (EX, MGC) need not to be combined in one device and can also realised as physically separated devices (EX, MGC). The telephone exchange may be for example a local exchange (LEX) or a transit exchange (TEX).

The call connection 1 is established with involvement of both media gateway controllers MGC1 and MGC2 of the media gateway controller exchange MGC/EX1, MGC/EX2. Advanced call services, in particular involving bearer related features like three-party-call, conference, call waiting, music-on-hold, are not available for the subscriber of this scenario without external equipment.

A call connection between two PSTN subscriber terminations T1, T2 is indicated by reference number 2. This call connection is set-up between two PSTN networks over the IP network, i.e. by making use of the trunk gateways TGW 1 and TGW 2. As indicated in figure 2, the PSTN subscribers could be plain old telephone subscriber (POTS), i.e. analog users, integrated service digital network (ISDN) subscriber or could be connected via existing PSTN trunks with channel associated signalling (CAS) or ISDN user part (ISUP).

Figure 2 shows further a call connection 3 between the AGW subscriber termination T3 and a PSTN subscriber termination T2. The AGW subscriber termination T3 is connected to the first access gateway AGW 1 and the PSTN subscriber termination T2 is connected to the exchange EX 2 of the media gateway controller exchange MGC/EX 2. Note, that the AGW 1 and the trunk gateway TGW 2 are controlled by the MGC 1 of the media gateway controller exchange MGC/EX 1. A first trunk gateway TGW 1 is connected the exchange EX 1 of the MGC/EX1, but not controlled by the MGC 1. The controlling of the second access gateway AGW2 and first trunk gateway TGW 1 is done by the MGC 2 of the MGC/EX 2.

For a call connection between the AGW subscriber T3 the PSTN subscriber T2, a bearer channel is to be established via TGW. The first exchanges EX 1 has via the MGC 1 a control connection to the AGW 1. The exchanges EX 1, EX 2 interact via signalling protocol information with each other, in particular to determine which channels (for example which one out of 30 PCM-channels) are used for the bearer. Afterwards the first exchange EX 1 controls with the MGC 1 the TGW 2, which is bearer connected with the exchange EX 2, accordingly to set-up the agreed bearer channel in the TGW and to connect the bearer on the IP side towards the AGW.
For a connection between an AGW subscriber termination T4 and a PSTN subscriber termination T1 of the exchange EX 1, a bearer channel is established in a similar manner, wherein the TGW 1, connected with the exchange EX 1 and controlled by the MGC 2, is involved.

The above describes state of the art methods enables a standard call connection between a AGW users a PSTN users. Advanced call services, in particular involving bearer related features like three-party-call, conference, call waiting, music-on-hold, are not available for the subscriber of this scenario without external equipment.

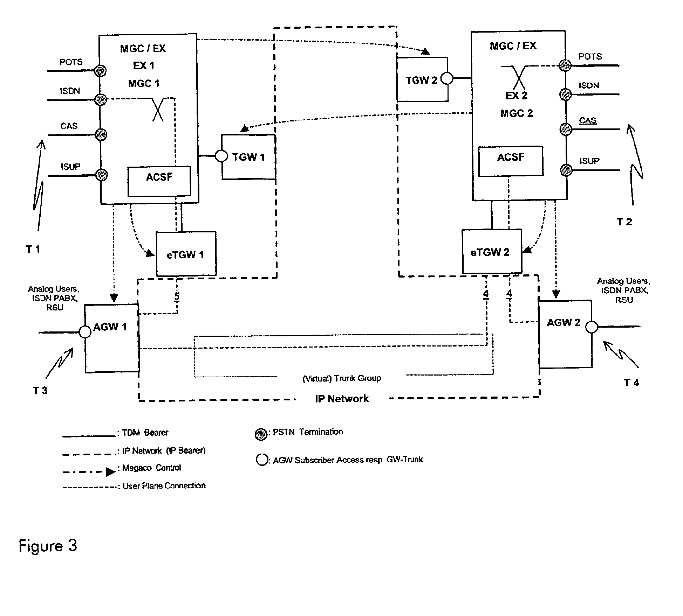

Figure 3 shows schematically a system for executing a so called extend mechanism or extend scenario according to the invention.
The extend scenario is used for providing advanced call service for call connections between AGW subscribers and PSTN subscribers as well as AGW subscribers among each other.

The general architecture of the network structure is similar to the network structure shown in figure 2. Equal components or parts of figure 3 are denoted with equal reference numbers as in figure 2. A difference between figures 2 and 3 relates to the routing of the bearer. According to figure 2, the bearer is directly routed via RTP/IP protocols between the involved gateways, as indicated by reference numbers 1, 2 and 3 in figure 2 for calls between AGW subscribers or AGW subscriber and PSTN subscriber.

A basic idea of the present invention is to route the bearer to a digital switching device of the exchange EX in order to provide advanced call services like three-party call, conference call, call waiting with announcements, music-on-hold, (switched based) announcements etc. The digital switching device is for example the Digital Switching Network (DSN) of the exchange EX.

Based on such a routing, the advanced call service functionality of the exchange or the digital switching device, respectively, is provided for the AGW subscriber and toward IP gateways too, e.g. the access gateways AGW and/or trunk gateways TGW.

The extend scenario comprises the inserting of an additional gateway, for example a trunk gateway, which is connected to a port, e.g. a time division multiplex (TDM) port, of the exchange EX. The functionality of this gateway could be the same as a normal gateway, e.g. AGW, TGW, so physically the same gateway equipment as the one for the IP-Trunking can be used. For indicating its use in the extend scenario it is called an extend gateway, for example extend trunk gateway (eTGW) or an extend access gateway (eAGW). The extend gateway is in particular connected to a predetermined port of the exchange and controlled by the media gateway controller MGC, associated to the exchange, for example EX1 and MGW1. In case of a media gateway controller exchange MGW/EX, it is controlled by its media gateway controller. Furthermore, the media gateway controller exchange MGC / EX, i.e. an exchange EX and a media gateway controller MGC, are provided with additional components, which enables the use of the exchange functionality, in particular of the advanced call services, for subscribers connected via the gateways (AGWs, TGWs).

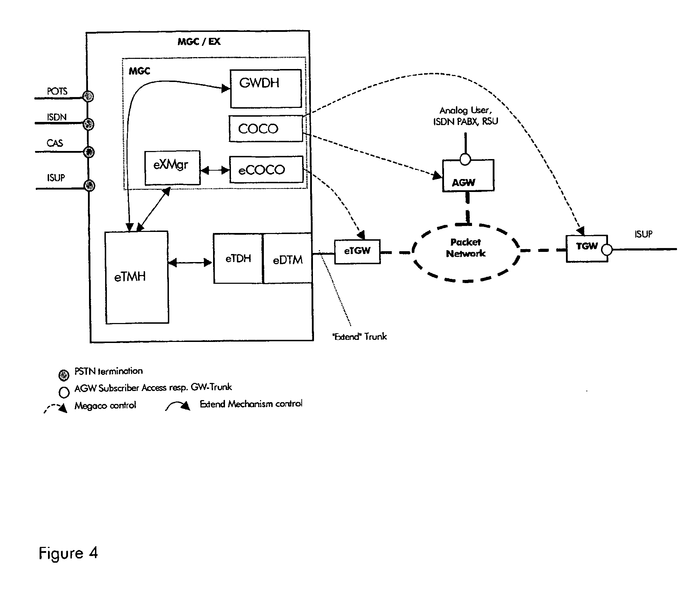

For this purpose the media gateway controller exchange MGC/ EX is provided with an extend trigger mechanism handler (eTMH), an extend Digital Trunk Module (eDTM) and an extend Trunk Device Handler (eTDH), an extend resource manager (eXmgr) and an extend connection control (eCOCO). These components and its functions are described later in more detail with reference to figure 4.

The extend mechanism or scenario is in particular used if bearer related features, for example announcements, three-arty (3PTY), intelligent networks and announcement (IN), explicit call transfer (ECT), call hold (HOLD), or conference (CONF) are invoked in calls between AGW subscribers among each other. For sharing the advanced call service functionality of the exchange, it is preferable to re-configure the bearer to pass via a digital switching device of the exchange EX by insertion of an extend trunk gateway eTGW.

The insertion of an extend gateway eTGW in generally may occur in the call setup phase, (e.g. for interception) or in a stable phase (e.g. 3PTY, CONF, IN etc.). The inserted eTGW will be removed if required, for example an announcement is played to an AGW subscriber and then the call establishment to another AGW subscriber is continued.

With reference to figure 3, reference number 4 denotes a call connection between a first AGW Subscriber T4 and a second AGW subscriber T3. In order to enable advanced call services to the AGW subscriber T4, T3, the bearer is routed via a digital switching device of the second exchange EX 2. This is realised by inserting the extend trunk gateway eTGW 2. Thus, the advanced call service of the digital switching device or exchange respectively, are available for AGW subscriber T4, T3. The digital switching device is for example a digital switching network (DNS) of the exchange or a conference bridge. In figure 3, the digital switching device is indicated by reference number ACSF, which stands for advanced call service feature. Of course, in a similar way the bearer could also be routed via the first eTGW 1 and a digital switching device ACSF of the first exchange EX 1. The aforementioned additional components of the exchange EX and the media gateway controller MGC for executing the extend mechanism according to the invention are not shown in figure 3, but described in connection with figure 4.

With reference to figure 3, a further embodiment of the invention is shown with reference number 5. A call connection 5 between an AGW subscriber T3 and a PSTN subscriber T1 is established using the extend mechanism. The extend trunk gateway eTGW 1 is inserted at the first media gateway controller exchange MGC/EX 1, wherein the eTGW 1 is connected with the exchange EX 1 and is controlled by the MGC 1. The digital switching device, to which the bearer is routed, is intimated by the connection to the advanced call service functions (ACSF) of the exchange EX. In addition to the providing of the advanced call functions, the insertion for the eTDW 1 is also used for the call connection between the AGW subscriber T3 and PSTN subscriber T1, i.e. subscribers which are assigned to the same media gateway controller MGC1 via the access gateway AGW 1 and exchange EX1. With other words: The call connection is established by re-using the extend mechanism to provide a interworking connectivity.

Figure 4 shows in more detail components of a exchange media gateway controller MGC/EX for executing the extend mechanism according to the invention. As mentioned before, the media gateway controller exchange MGC/EX comprises an exchange EX and a media gateway controller MGC. Exchange EX and media gateway controller MGC are shown in figure 4 as one device, but can also realised as two physical separated devices. The exchange might be a local exchange (LEX) or transit exchange (TEX).

The media gateway controller exchange MGC/EX is provided with an extend trigger mechanism handler eTMH, an extend Digital Trunk Module eDTM and an extend Trunk Device Handler eTDH, an extend resource manager eXmgr and an extend connection control eCOCO.

Components which could allocate to a (not shown) physically separated media gateway controller are indicated by a dashed rectangle. These are in particular the extend resource manager eXmgr and the extend connection control eCOCO. In addition, the extend trigger mechanism handler eTMH (shown in figure 4 as part of the exchange EX) could be complete or partly allocate to a MGC too.

The exchange part of the MGC/EX comprises in comparison to a usual exchange at least one extend digital trunk module eDTM, the extend trunk device handler eTDH and the extend trigger mechanism handler eTMH for inserting the additional gateway.

The extend digital trunk Module eDTM is a hardware module for physically connecting the eTGW with the exchange EX via several TDM channels. It is basically a gateway port which is controlled by extend trunk device handler eTDH software. All the TDM channels of all eDTMs represent a pool from which the extend resource manager eXmgr selects.

The extend trunk device handler eTDH is a software module having a different and new functions in comparison to the device handler for normal used trunk gateways. It is a device handler for the eDTM modules which are used to connect the TDM trunks from the eTGWs. On the one hand it is les komplex as "normal" trunk device handler, because some functions (e.g. disabling of hunting; operation, administration and maintenance (OAM); measurements etc.) should not be provided on the other hand it is adapted to interface with the eTMH instead of the normal PSTN call handling software

The extend trigger mechanism handler eTMH is a software and is provided for detecting certain call conditions for executing the extend mechanism. It determines if the extend devices, i.e. the eDTM and the eTGW, need to be inserted into the bearer path. It can be either on the incoming or on the outgoing side, but it is always on that side where the access to the megaco-connection-control is necessary in order to access the AGW or TGW, respectively. The removal of these extend-devices again will be in some cases also necessary and will be started from the same module which had the trigger point.

The MGC part of the MGC/EX comprises in comparison to a usual MGC an extend resource manager (eXMgr) and an extend connection control (eCOCO). Figure 4 shows further a gateway device handler (GWDH) and a connection control (COCO), which are part of a usual MGC.

The extend resource manager eXMgr does the resource management for the eTGWs, e.g. seize/release the eTGW ports via the extend connection control eCoCo and resource management for the eDTMs and the TDM channels. On request from a gateway device handler GWDH the extend resource manager eXMgr selects either a channel from resources reserved for signalling capability or from resources reserved for bearer capability. Preferable, it keeps a dynamic table to know from which GWDH an extend resource was requested. This for advantageously for routing back the response messages of eXMgr and eCoCo. The dynamic tables of eXMgr might be used also to inform a failed GWDH after it is back again about the extend resources it has been used before (for example in response to a connection reset request). In case of crossover performed by a GWDH, the extend resources could be determined and indicated to the GWDH, so that it can be released.

In a preferred embodiment the eXMgr comprises also device handler functionality for the eTGWs, like initialisation and service state handling, to off-load the GWDH from this task.

The connection control COCO, controlling AGWs and TGWs, is basically kept unchanged in view of the extend scenario. However, COCO and the later described eCOCO might be realised as one connection control comprising the functions of the COCO and eCoCO.

The extend connection control eCOCO is an adapted COCO such that it can handle eTGWs.

The gateway device handler GWDH comprises several functions:
- Seizure and release of AGW and /or TGWs ports via CoCo.
- Initialisation and service state handling of AGWs and/or TGWs.
- Handling of events from the AGWs (e.g. analogue signalling events).
- Triggering the manipulation of connection contexts on the AGW and/or TGWs
- Triggers insertion/removal of echo control devices towards COCO, eCOCO based on used bearer capability
- eTMH functionality.

The extend trigger mechanism handler eTMH supports the extend scenario on a device handling level:
- Interface to the extend resource manager (eXMgr ) to reserve a digital trunk module ( eDTM) and a PCM channel.
- Interface to the eTDH on the eDTM to perform TDM bearer related control (e.g. switch network pathes through digital switchinh network DNS, inject tones from exchange tone-port, etc.).
- Interface to the extend manager (eXMgr ) seize/release an eTGW.
   Extend trigger detection due to requests to inject in-band information.
   Certain call conditions for executing the extend mechanism comprise advanced call services, in particular bearer related features like three party service (3PTY), conference (CONF), call waiting(CW), explicit call transfer (ECT), call hold (HOLD) or intelligent network announcements (IN).
   Following different triggers for the extend mechanism are described in more detail.

A first trigger event is a call set-up/call extension:

The extend device handler eDH and extend trunk gateway eTGW are in particular required if one of the terminations is a PSTN termination. In case of a terminating call this can be detected by the extend trigger mechanism handler eTMH by checking the path set-up information. In case of an originating call the originating extend trigger mechanism handler eTMH includes the data of the physical device already in the set-up-request which is sent to the terminating side. Therefore a two-step approach is introduced here:
1. reservation of an eDTM, send the setup request to terminating side.
2.
   a) free the eDTM resource again on request by the terminating side or
   b) continue with eTGW allocation.
   A PSTN-Control Element (PSTN-CE) of the Exchange will usually not have the interface to request the eDTM to be freed, so the result is action b).

The treatment at originating side for the call set-up/call extension is the following:

Before originating signalling sends the set-up-request to the terminating side it always sends a request to the device handler (DH), for example a gateway device handler (GWDH) to request a bearer channel.

The GWDH remembers (by extend trigger mechanism handler eTMH ) whether extend devices are already included (e.g. re-routeing cases) or not.

The following actions are only applicable if no extend devices are included yet.
- The GWDH (eTMH) sends a request to eXMgr to reserve a eDTM circuit.
- The GWDH (eTMH) seizes the circuit via the interface to the eDH. The eDH returns the DSN path set-up information.
   If there is a lack of extend digital trunk module eDTM resources the extend resource manager eXMgr will return an unsuccessful indication. The gateway device handler GWDH will however still proceed with call set-up in order to maximise the probability of successful calls if the terminating side is also a GWDH (i.e. not needing the extend devices). The digital switching network (DSN) path set-up information will contain default data in this case. If this default data is received by a device hander of a PSTN termination, this will lead to the release of the call by the terminating side.
- The DSN Path setup Information is passed back to signalling which includes it into the setup request to terminating signalling.
- If the terminating side requests a release of the eDTM resources the GWDH (eTMH) releases the reserved circuit via the Interface to the eDH and updates the resource status via the interface to the eXMgr.
- If the terminating side is setting up a DSN switch path to the eDTM, the eDH will notify the originating GWDH about this and the GWDH (eTMH) will continue to request an eTGW via the eXMgr.

The treatment at terminating side for the call set-up/call extension is the following:

When the terminating signalling gets a setup-request it will pass the DSN path setup information which was received from originating side to the GWDH. The GWDH checks the remote device handler type, which is part of the received path set-up information:
- If it is also a GWDH it continues with call setup (no extend case, bearer via RTP). This occurs in case that the originating side had a lack of eDTM resources.
- If it is an eDH then send a release request to this eDH and continue call set-up (no extend case; bearer via RTP). This is the normal behaviour for calls between two gateway control elements.
- In any other case the extend scenario is performed via eTMH (i.e. get a eDTM resource from eXMgr, seizure of a circuit on the eDTM (incl. setup of a DSN path) and request the allocation of an eTGW via eXMgr).

A second trigger event is a bearer reconfiguration:

If signalling receives a bearer reconfiguration request (e.g. in the case of 3PTY or ECT service) the actions on the originating and terminating side are the same as described above for the call set-up/call extension case.

A third trigger event is an in-band information:

In general the media gateway controller exchange MGC/EX has to distinguish between the following cases for connecting in-band information towards the user:
1) The MGC/EX informs (notifies) the gateway in order to provide in-band information
2) The MGC/EX uses internal announcement resources and triggers the extend scenario in order to connect (case 2a) tone-port information or (case 2b) announcements to the local (cluster) side and/or to the remote (network) side.

For tone-port information the GWDH has a configuration table to determine whether a requested in-band information shall be provided by the gateway (case 1) or whether it shall be provided by the MGC/EX and the extend scenario must be triggered (case 2a).

The release of the extend devices or the extend mechanism, respectively, for the above described cases it triggers by:
- The extend devices (eDTM and eTGW) are released whenever the GWDH initates release of the related IP port in the gateway.
- A request from the remote GWDH is received to free a reserved eDTM resource.

If the extend devices have been inserted to connect in-band information the GWDH may keep the extend device when the tone/announcement has finished for further use (e.g. tones from eDTM during call setup).

## Claims

1. Method for connecting a terminal (T 3, T 4) connected to an IP-network via an Access Gateway (AGW) to another terminal (T 4, T 3) connected to an IP-network via an Access Gateway (AGW) and/or with a terminal (T 1, T 2) connected to a PSTN network using an exchange (EX1, EX2) and a media gateway controller (MGC1, MGC2), and gateways (AGW, TGW),
**characterized in that**,
for providing of advanced call services an extend mechanism is executed, that comprises the steps of:
- detecting of call conditions indicating a request for advanced call service
- inserting of an extend gateway (eTGW) in a bearer connection between the involved terminations (T1, T2, T3, T4) for providing of advanced call services, wherein the extend gateway (eTGW) is connected to a port of the exchange (EX),
- routing the bearer to a digital switching device (ACSF) of the exchange (EX) via the inserted extend gateway (eTGW), and
- providing the advanced call service by the digital switching device of the exchange.

2. Method according to claim 1, **characterized in that** the extend gateway (eTGW), which is connected with a port of the exchange (EX), is inserted in an existing bearer connection and/or in a to be established bearer connection of the involved terminations (T1, T2, T3, T4).

3. Method according to claim 1 or 2, **characterized in that**, said advanced call services comprise at least one of the following services
- announcement,
- three party call (3 PTY),
- explicit call transfer (ECT),
- conference (CONF),
- call waiting (CW),
- hold (HOLD),
- intelligent network announcements,
- intelligent network digit collection.

4. Method according to one of the claims 1 to 3, **characterized in that**, said inserted extend gateway (eTGW) will be removed if the bearer related advanced call features are terminated.

5. Method according to one of the claims 1 to 4, **characterized in that**, it controls the inserting and/or removing of said extend gateway (eTGW) and/or provides the advanced call service to the subscriber.

6. Media gateway controller (MGC), comprising means (eXMgr, eCOCO) for executing an extend mechanism comprising
- means for detecting of call conditions indicating a request for advanced call service,
- means for inserting and/or removing of an extend

7. Media gateway controller according to claim 6 wherein the media gateway controller and the exchange (MGC/EX) are in one device, comprising means (eXMgr, eCOCO, eTMH, eTDH, eDTM) for executing the extend mechanism, in particular for controlling the inserting and/or removing of said extend gateway (eTGW) and/or providing the advanced call service to the subscriber. gateway (eTGW) in a bearer connection between the involved terminations (T1, T2, T3, T4) for providing of advanced call services, wherein the extend gateway (eTGW) is connected to a port of the exchange (EX),
- means for routing the bearer to a digital switching device (ACSF) of the exchange (EX) via the inserted extend gateway (eTGW), and
- means for providing the advanced call service by the digital switching device (ACSF) of the exchange, wherein said means are provided to control, together with corresponding means of the exchange, the execution of said extend mechanism, in particular for controlling the inserting and/or removing of an extend gateway (eTGW) and/or providing the advanced call service to the subscriber.

8. Exchange (EX), comprising means (eTMH, eTDH, eDTM) for executing an extend mechanism comprising
- means for detecting of call conditions indicating a request for advanced call service,
- means for inserting and/or removing of an extend gateway (eTGW) in a bearer connection between the involved terminations (T1, T2, T3, T4) for providing of advanced call services, wherein the extend gateway (eTGW) is connected to a port of the exchange (EX),
- means for routing the bearer to a digital switching device (ACSF) of the exchange (EX) via the inserted extend gateway (eTGW), and
- means for providing the advanced call service by the digital switching device (ACSF) of the exchange, wherein said means (eTMH, eTDH, eDTM) are provided to control, together with corresponding means of the media gateway controller, the execution of the said extend mechanism, in particular for controlling the inserting and/or removing of said extend gateway (eTGW) and/or providing the advanced call service to the subscriber.

## Patentansprüche

1. Verfahren zum Anschließen eines Endgeräts (T3, T4), welches über ein Zugangs-Gateway (AGW) an ein IP-Netzwerk angeschlossen ist, an ein anderes Endgerät (T4, T3), welches über ein Zugangs-Gateway (AGW) an ein IP-Netzwerk angeschlossen ist, und/oder an ein Endgerät (T1, T2), welches unter Verwendung einer Vermittlungseinrichtung (EX1, EX2) und eines Media Gateway Controllers (MGC1, MGC2) und Gateways (AGW, TGW) an ein PSTN-Netzwerk angeschlossen ist,
**dadurch gekennzeichnet, dass**
für die Bereitstellung von weitergehenden Anrufdiensten ein Erweiterungsmechanismus ausgeführt wird, wobei das Ausführen die folgenden Schritte umfasst:
- Erkennen von Anrufbedingungen, welche eine Anforderung für einen weitergehenden Anrufdienst anzeigen,
- Einfügen eines Erweiterungs-Gateways (eTGW) in eine Trägerverbindung zwischen den beteiligten Abschlüssen (T1, T2, T3, T4) für die Bereitstellung von weitergehenden Anrufdiensten, wobei das Erweiterungs-Gateway (eTGW) an einen Port der Vermittlungseinrichtung (EX) angeschlossen ist,
- Routen des Trägers an eine digitale Schaltvorrichtung (ACSF) der Vermittlungseinrichtung (EX) über das eingefügte Erweiterungs-Gateway (eTGW), und
- Bereitstellen des weitergehenden Anrufdienstes durch die digitale Schaltvorrichtung der Vermittlungseinrichtung.

2. Verfahren nach Anspruch 1, **dadurch gekennzeichnet, dass** das Erweiterungs-Gateway (eTGW), welches an einen Port der Vermittlungseinrichtung (EX) angeschlossen ist, in eine bestehende Trägerverbindung und/oder in eine aufzubauende Trägerverbindung des beteiligten Endgeräts (T1, T2, T3, T4) eingefügt wird.

3. Verfahren nach Anspruch 1 oder 2, **dadurch gekennzeichnet, dass** die besagten weitergehenden Anrufdienste mindestens einen der folgenden Dienste umfassen:
- Ansage,
- Dreierkonferenz (3 PTY),
- Vermitteln im Amt (Explicit Call Transfer, ECT),
- Konferenz (CONF),
- Anklopfen (CW),
- Halten (HOLD),
- Ansagen im intelligenten Netzwerk,
- Wählziffererfassung im intelligenten Netzwerk.

4. Verfahren nach einem der Ansprüche 1 bis 3, **dadurch gekennzeichnet, dass** das eingefügte Erweiterungs-Gateway (eTGW) entfernt wird, wenn die trägerbezogenen erweiterten Anruffunktionen beendet sind.

5. Verfahren nach einem der Ansprüche 1 bis 4, **dadurch gekennzeichnet, dass** es das Einfügen und/oder Entfernen des besagten Erweiterungs-Gateways (eTGW) steuert und/oder den weitergehenden Anrufdienst an den Teilnehmer bereitstellt.

6. Media Gateway Controller (MGC), umfassend Mittel (eXMgr, eCOCO) zum Ausführen eines Erweiterungsmechanismus, umfassend:
- Mittel zum Erkennen von Anrufbedingungen, welche eine Anforderung für einen weitergehenden Anrufdienst anzeigen,
- Mittel zum Einfügen und/oder Entfernen eines Erweiterungs-Gateways (eTGW) in eine Trägerverbindung zwischen den beteiligten Abschlüssen (T1, T2, T3, T4) für die Bereitstellung von weitergehenden Anrufdiensten, wobei das Erweiterungs-Gateway (eTGW) an einen Port der Vermittlungseinrichtung (EX) angeschlossen ist,
- Mittel zum Routen des Trägers an eine digitale Schaltvorrichtung (ACSF) der Vermittlungseinrichtung (EX) über das eingefügte Erweiterungs-Gateway (eTGW), und
- Mittel zum Bereitstellen des weitergehenden Anrufdienstes durch die digitale Schaltvorrichtung (ACSF) der Vermittlungseinrichtung, wobei die besagten Mittel bereitgestellt werden, um, zusammen mit entsprechenden Mitteln der Vermittlungsvorrichtung, das Ausführen des besagten Erweiterungsmechanismus, insbesondere zur Steuerung des Einfügens und/oder Entfernens des besagten Erweiterungs-Gateways (eTGW) und/oder zur Bereitstellung des weitergehenden Anrufdienstes an den Teilnehmer zu steuern.

7. Media Gateway Controller nach Anspruch 6, wobei der Media Gateway Controller und die Vermittlungseinrichtung (MGC/EX) in einer Vorrichtung angeordnet sind, umfassend Mittel (eXMgr, eCOCO, eTMH, eTDH, eDTM) zum Ausführen des Erweiterungsmechanismus, insbesondere zum Steuern des Einfügens und/oder Entfernens des besagten Erweiterungs-Gateways (eTGW) und/oder zum Bereitstellen des weitergehenden Anrufdienstes an den Teilnehmer.

8. Vermittlungseinrichtung (EX), umfassend Mittel (eTMH, eTDH, eDTM) zum Ausführen eines Erweiterungsmechanismus, umfassend
- Mittel zum Erkennen von Anrufbedingungen, welche eine Anforderung für einen weitergehenden Anrufdienst anzeigen,
- Mittel zum Einfügen und/oder Entfernen eines Erweiterungs-Gateways (eTGW) in eine Trägerverbindung zwischen den beteiligten Abschlüsse (T1, T2, T3, T4) für die Bereitstellung von weitergehenden Anrufdienstes, wobei das Erweiterungs-Gateway (eTGW) an einen Port der Vermittlungseinrichtung (EX) angeschlossen ist,
- Mittel zum Routen des Trägers an eine digitale Schaltvorrichtung (ACSF) der Vermittlungseinrichtung (EX) über das eingefügte Erweiterungs-Gateway (eTGW), und
- Mittel zum Bereitstellen des weitergehenden Anrufdienstes durch die digitale Schaltvorrichtung (ACSF) der Vermittlungseinrichtung, wobei die besagten Mittel (eTMH, eTDH, eDTM) bereitgestellt werden, um, zusammen mit entsprechenden Mitteln des Media Gateway Controllers, das Ausführen des besagten Erweiterungsmechanismus, insbesondere zur Steuerung des Einfügens und/oder Entfernens des besagten Erweiterungs-Gateways (eTGW) und/oder zur Bereitstellung des weitergehenden Anrufdienstes an den Teilnehmer zu steuern.

## Revendications

1. Procédé pour connecter un terminal (T3, T4), connecté à un réseau IP par l'intermédiaire d'une passerelle d'accès (AGW), à un autre terminal (T4, T3) connecté à un réseau IP par l'intermédiaire d'une passerelle d'accès (AGW) et/ou à un terminal (T1, T2) connecté à un réseau RTPC en utilisant un central téléphonique (EX1, EX2) et un contrôleur de passerelle média (MGC1, MGC2), et des passerelles (AGW, TGW), **caractérisé en ce que**,
pour fournir les services d'appel avancés, on exécute un mécanisme d'extension qui comprend les étapes suivantes :
- détecter toutes les conditions d'appel indiquant une demande de service d'appel avancé
- insérer une passerelle d'extension (eTGW) dans une connexion support entre les terminaux (T1, T2, T3, T4) impliqués pour fournir des services d'appel avancés, dans lequel la passerelle d'extension (eTGW) est connectée à un port du central téléphonique, (EX),
- acheminer le support vers un dispositif de commutation numérique (ACSF) du central téléphonique (EX) par l'intermédiaire de la passerelle d'extension (eTGW) insérée, et
- fournir le service d'appel avancé par le dispositif de commutation numérique du central téléphonique.

2. Procédé selon la revendication 1, **caractérisé en ce que** la passerelle d'extension (eTGW), qui est connectée à un port du central téléphonique (EX), est insérée dans une connexion support existante et/ou dans une connexion support à établir des terminaux (T1, T2, T3, T4) impliqués.

3. Procédé selon la revendication 1 ou 2, **caractérisé en ce que** lesdits services d'appel avancés comprennent au moins un des services suivants :
- annonce,
- conversation à trois (3 PTY),
- transfert d'appel explicite (ECT),
- conférence (CONF),
- appel en attente (CW),
- mise en attente (HOLD),
- annonces de réseau intelligent,
- groupement d'éléments numériques de réseau intelligent.

4. Procédé selon l'une des revendications 1 à 3, **caractérisé en ce que** ladite passerelle d'extension (eTGW) insérée sera retirée si les caractéristiques d'appel avancées liées au support sont désactivées.

5. Procédé selon l'une des revendications 1 à 4, **caractérisé en ce qu'**il commande l'insertion et/ou le retrait de ladite passerelle d'extension (eTGW) et/ou fournit le service d'appel avancé à l'abonné.

6. Contrôleur de passerelle média (MGC), comprenant des moyens (eXMgr, eCOCO) pour exécuter un mécanisme d'extension comprenant :
- moyens pour détecter toutes les conditions d'appel indiquant une demande de service d'appel avancé,
- moyens pour insérer et/ou retirer une passerelle d'extension (eTGW) dans une connexion support entre les terminaux (T1, T2, T3, T4) impliqués pour fournir des services d'appel avancés, dans lequel la passerelle d'extension (eTGW) est connectée à un port du central téléphonique (EX),
- moyens pour acheminer le support vers un dispositif de commutation numérique (ACSF) du central téléphonique (EX) par l'intermédiaire de la passerelle d'extension (eTGW) insérée, et
- moyens pour fournir le service d'appel avancé par le dispositif de commutation numérique (ACSF) du central téléphonique, dans lequel lesdits moyens sont fournis pour commander, avec des moyens correspondants du central téléphonique, l'exécution dudit mécanisme d'extension, en particulier pour commander l'insertion et/ou le retrait d'une passerelle d'extension (eTGW) et/ou pour fournir le service d'appel avancé à l'abonné.

7. Contrôleur de passerelle média selon la revendication 6 dans lequel le contrôleur de passerelle média et le central téléphonique (MGC/EX) sont dans un dispositif, comprenant des moyens (eXMgr, COCO, eTMH, eTDH, eDTM) pour exécuter le mécanisme d'extension, en particulier pour commander l'insertion et/ou le retrait de ladite passerelle d'extension (eTGW) et/ou pour fournir le service d'appel avancé à l'abonné.

8. Central téléphonique (EX), comprenant des moyens (eTMH, eTDH, eDTM) pour exécuter un mécanisme d'extension comprenant :
- moyens pour détecter toutes les conditions d'appel indiquant une demande de service d'appel avancé,
- moyens pour insérer et/ou retirer une passerelle d'extension (eTGW) dans une connexion support entre les terminaux (T1, T2, T3, T4) impliqués pour fournir des services d'appel avancés, dans lequel la passerelle d'extension (eTGW) est connectée à un port du central téléphonique (EX),
- moyens pour acheminer le support vers un dispositif de commutation numérique (ACSF) du central téléphonique (EX) par l'intermédiaire de la passerelle d'extension (eTGW) insérée, et
- moyens pour fournir le service d'appel avancé par le dispositif de commutation numérique (ACSF) du central téléphonique, dans lequel lesdits moyens (eTMH, eTDH, eDTM) sont fournis pour commander, avec des moyens correspondants du contrôleur de passerelle média, l'exécution dudit mécanisme d'extension, en particulier pour commander l'insertion et/ou le retrait de ladite passerelle d'extension (eTGW) et/ou pour fournir le service d'appel avancé à l'abonné.
